# EUROPÄISCHE PATENTSCHRIFT

(11) **EP 2 054 702 B1**
(45) Veröffentlichungstag und Bekanntmachung des Hinweises auf die Patenterteilung: **30.11.2011**
(21) Anmeldenummer: 07786903.0
(22) Anmeldetag: 28.06.2007
(51) Int. Cl.: G01F 23/296

(54) **VORRICHTUNG ZUR BESTIMMUNG UND/ODER ÜBERWACHUNG EINER PROZESSGRÖSSE EINES MEDIUMS**
APPARATUS FOR DETERMINING AND/OR MONITORING A PROCESS VARIABLE OF A MEDIUM
DISPOSITIF POUR DÉTERMINER ET/OU CONTRÔLER UNE VALEUR DE PROCESSUS D'UN FLUIDE

(30) Priorität: 02.08.2006 DE 102006036397; 19.03.2007 DE 102007013557
(43) Veröffentlichungstag der Anmeldung: 06.05.2009
(73) Patentinhaber: Endress+Hauser GmbH+Co. KG, 79689 Maulburg (DE)
(72) Erfinder: D'ANGELICO, Sascha, 79585 Rümmingen (DE); MÜLLER, Alexander, 79361 Sasbach-Jechtingen (DE); ROMBACH, Walter, 79618 Rheinfelden (DE)
(74) Vertreter: Andres, Angelika Maria
(86) Internationale Anmeldenummer: PCT/EP2007/056512
(87) Internationale Veröffentlichungsnummer: WO 2008/015057

(56) Entgegenhaltungen:
- WO-A-03/050479
- DE-C1- 19 840 796
- US-A- 3 266 311

## Beschreibung

Die Erfindung bezieht sich auf eine Vorrichtung zur Bestimmung und/oder Überwachung mindestens einer Prozessgröße eines Mediums in einem Behälter, mit mindestens einer mechanisch schwingfähigen Einheit , wobei es sich bei der mechanisch schwingfähigen Einheit um eine Schwinggabel, einen Einstab oder um einen Membranschwinger handelt, mit mindestens einer Anrege-/Empfangseinheit , welche die mechanisch schwingfähige Einheit zu mechanischen Schwingungen anregt und welche die mechanischen Schwingungen der mechanisch schwingfähigen Einheit empfängt, und mit mindestens einer Elektronikeinheit , welche die Anrege-/Empfangseinheit mit einem elektrischen Ausgangssignal S _{A} beaufschlagt, und welche von der Anrege-/Empfangseinheit ein elektrisches Eingangssignal S _{E} empfängt, wobei in der Elektronikeinheit mindestens ein Eingangsverstärker und mindestens ein Ausgangsverstärker vorgesehen sind, und wobei die Elektronikeinheit einen Gesamtverstärkungsfaktor aufweist. Die Elektronikeinheit dient insbesondere der Rückkopplung. Bei dem Medium handelt es sich beispielsweise um eine Flüssigkeit oder um ein Schüttgut. Die Prozessgröße ist weiterhin beispielsweise der Füllstand, die Dichte oder die Viskosität des Mediums.

Im Stand der Technik sind Messgeräte bekannt, bei denen eine sog. Schwinggabel als mechanisch schwingfähige Einheit zu Schwingungen angeregt wird. Da die Schwingungen, bzw. deren Kenngrößen wie Frequenz, Amplitude und Phase abhängig sind vom Kontakt mit einem Medium bzw. von dessen Eigenschaften wie Dichte oder Viskosität, lässt sich aus den Kenngrößen der Schwingungen auf diese Messgrößen rückschließen. So ist mit einem solchen Messgerät beispielsweise die Überwachung des Füllstandes oder die Messung der Dichte des Mediums möglich.

Eine Problematik besteht darin, dass die Amplitude der Eingangssignale S _{E} der Elektronikeinheit - also der Empfangssignale von der mechanisch schwingfähigen Einheit - sehr unterschiedlich sein kann. Schwingt beispielsweise die schwingfähige Einheit unbedeckt vom Medium, so ergibt sich eine große Amplitude, ist jedoch die schwingfähige Einheit durch das Medium bedeckt, so sinkt die Amplitude ggf. deutlich herab. Eine solche Dynamik ist jedoch bei der Elektronik mit solchen Problemen verbunden wie der amplitudenabhängigen Phasenverschiebung, den Nichtlinearitäten, dem Signal-Rausch-Abstand oder der Sättigung. Weiterhin ist auch der Verstärker entsprechend auszulegen, um einen solchen Dynamikbereich abzudecken.

Daher ist es die Aufgabe der Erfindung, ein Messgerät der vorbeschriebenen Art anzugeben, bei welchem die erforderliche Amplitudendynamik der Rückkoppelelektronik innerhalb eines vorgebbaren Bereichs liegt.

Die Erfindung löst die Aufgabe dadurch, dass der Verstärkungsfaktor des Ausgangsverstärkers einstellbar ist, dass der Verstärkungsfaktor des Eingangsverstärkers einstellbar ist, dass die Regeleinheit den Verstärkungsfaktor des Ausgangsverstärkers in Abhängigkeit von der Dämpfung der mechanisch schwingfähigen Einheit durch das Medium derartig einstellt, dass die Amplitude des elektrischen Eingangssignals S _{E} im Wesentlichen innerhalb eines vorgebbaren Amplitudenbandes liegt und dass der Verstärkungsfaktor des Ausgangsverstärkers bei geringerer Dämpfung durch das Medium abnimmt und bei höherer Dämpfung durch das Medium zunimmt, und dass die Regeleinheit den Verstärkungsfaktor des Ausgangsverstärkers und den Verstärkungsfaktor des Eingangsverstärkers derartig einstellt, dass der Gesamtverstärkungsfaktor der Elektronikeinheit im Wesentlichen gleich einem vorgebbaren Wert ist. Die Idee besteht somit darin, dass der Verstärkungsfaktor der Elektronik - beispielsweise durch eine passende Steuerung des Ausgangsverstärkers - passend gesteuert wird, so dass die mechanisch schwingfähige Einheit zur Anregung jeweils ein solches Signal mit einer solchen Amplitude erhält, dass das wiederum von der schwingfähigen Einheit abgegriffene Signal innerhalb eines vorgebbaren Dynamikbereichs liegt. D.h. die Rückkoppelelektronik wird derartig gesteuert, dass unter Beachtung der Dämpfung, die durch die mechanisch schwingfähige Einheit in Wechselwirkung mit dem Medium auftritt, der Eingang der Rückkoppelelektronik nur solche Signale erhält, deren Amplitude innerhalb eines gewünschten Bereiches liegt und dies insbesondere unabhängig vom Grad der Bedeckung der Gabel bzw. unabhängig von der Amplitudendämpfung durch die Wechselwirkung Medium - schwingfähige Einheit. Insbesondere gilt in dem Fall, dass das Medium und die Dämpfung durch das Medium gleich ist, dass die Amplitude des Eingangssignals S_{E} im Wesentlichen proportional zur Amplitude des Ausgangssignals S_{A} ist. Dabei wird insbesondere der Verstärkungsfaktor des Ausgangsverstärkers entsprechend dem anliegenden Signal bzw. entsprechend dem Füllstand bzw. entsprechend der Dämpfung durch das Medium bzw. entsprechend der erforderlichen Verstärkung gesteuert. Dabei wird die Verstärkung des Ausgangsverstärkers derartig eingestellt, dass eine höhere Dämpfung durch das Medium dazu führt, dass der Verstärkungsfaktor erhöht wird bzw. dass bei einer geringeren Dämpfung auch der Verstärkungsfaktor niedriger eingestellt wird. Im Fall der Dämpfung durch die Bedeckung der schwingfähigen Einheit durch das Medium geht ein höherer Grad der Bedeckung (d.h. eine höhere Dämpfung) also mit einem höheren Verstärkungsfaktor einher. Die Einstellung der Verstärkung der Elektronikeinheit wird somit auf ein Element der Elektronikeinheit fokussiert. Wesentlich ist dabei, dass die Summe aller Verstärkungen größer oder gleich eins ist. Dies wird u.a. dadurch erreicht, dass der Verstärkungsfaktor des Eingangsverstärkers entsprechend zur Einstellung der Verstärkung des Ausgangsverstärkers eingestellt wird, so dass sich insgesamt über die Elektronikeinheit ein vorgebbarer Verstärkungsfaktor ergibt. D.h. eine Erhöhung des Verstärkungsfaktors des Ausgangsverstärkers führt zu einer Verminderung des Verstärkungsfaktors des Eingangsverstärkers. Entsprechendes gilt für die Verminderung des Verstärkungsfaktors des Ausgangsverstärkers.

Eine Ausgestaltung beinhaltet, dass die Regeleinheit den Verstärkungsfaktor der Elektronikeinheit und/oder des Ausgangsverstärkers derartig einstellt, dass der Verstärkungsfaktor in dem Fall, dass die mechanisch schwingfähige Einheit unbedeckt von dem Medium ist, geringer ist als in dem Fall, dass die mechanisch schwingfähige Einheit bedeckt von dem Medium ist. Entsprechend wird der Verstärkungsfaktor des Eingangsverstärkers nachgestellt. In dieser Ausgestaltung wird somit der Verstärkungsfaktor der Elektronikeinheit insgesamt oder speziell des Ausgangsverstärkers eingestellt. Ist die schwingfähige Einheit von dem Medium bedeckt, so wird damit auch die Amplitude der Schwingungen vermindert bzw. die Amplitude des Eingangssignal S_{E} ist entsprechend gering. Schwingt jedoch die schwingfähige Einheit unbedeckt vom Medium oder nur wenig bedeckt, so kommt es auch nicht oder nur wenig zu einer Verminderung der Schwingungsamplitude, d.h. das Eingangssignal S_{E} hat ggf. die gleiche Amplitude wie das Ausgangssignal S _{A}. Wird nun erfindungsgemäß der Verstärkungsfaktor im bedeckten Fall größer eingestellt als im frei schwingenden Fall, so ergibt sich bei passender Einstellung der Werte, dass die Amplitude des Eingangssignal S_{E} im Wesentlichen innerhalb eines vorgebbaren Bereichs liegt, d.h. der Eingangsverstärker muss nur noch für eine geringe Dynamik ausgelegt werden. In einer Ausgestaltung findet die Einstellung des Verstärkungsfaktors linear zwischen den beiden Extremwerten - freies Schwingen und vollständig bedecktes Schwingen - statt.

Eine Ausgestaltung sieht vor, dass die Elektronikeinheit das elektrische Ausgangssignal S_{A} derartig erzeugt, dass die mechanisch schwingfähige Einheit Grundwellenschwingungen ausführt. Die mechanisch schwingfähige Einheit führt somit Schwingungen der Grundmode aus.

Eine Ausgestaltung beinhaltet, dass die Elektronikeinheit das elektrische Ausgangssignal S_{A} derartig erzeugt, dass es sich bei dem elektrischen Ausgangssignal S_{A} um eine Wechselspannung handelt.

Eine Ausgestaltung sieht vor, dass die Elektronikeinheit das elektrische Ausgangssignal S_{A} derartig erzeugt, dass es sich bei dem elektrischen Ausgangssignal S_{A} um eine sinusförmige Wechselspannung handelt.

Eine Ausgestaltung beinhaltet, dass es sich bei der Regeleinheit um einen Mikroprozessor handelt. Alternativ ist ein Mikroprozessor bzw. Mikrocontroller ein Bestandteil der Regeleinheit.

Die Erfindung wird anhand der nachfolgenden Zeichnungen näher erläutert. Es zeigt:

Fig. 1: eine aschematische Darstellung des erfindungsgemäßen Messgerätes in der Anwendung, und

Fig. 2: eine schematische Darstellung der erfindungsgemäßen Ausgestaltung der Elektronikeinheit des Messgerätes.

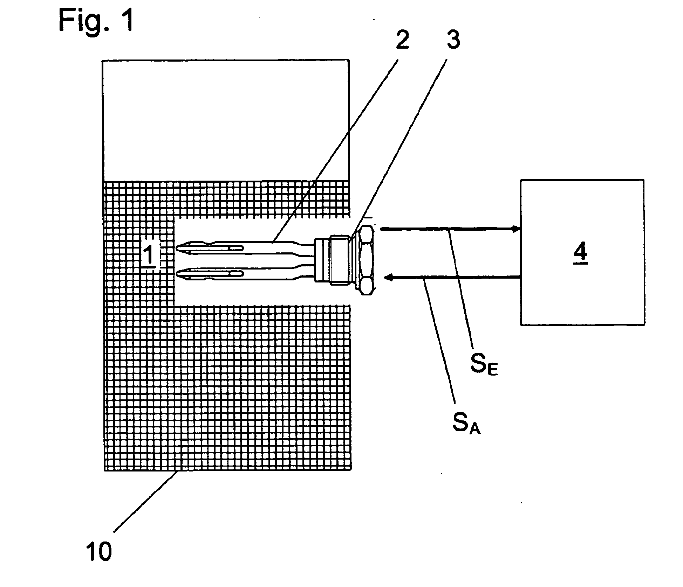

In der Fig. 1 ist schematisch die Anwendung eines erfindungsgemäßen Messgerätes dargestellt. In einem Behälter 10 befindet sich ein Medium 1, bei welchem es sich beispielsweise um eine Flüssigkeit handelt. Um den Füllstand des Mediums 1 zu überwachen oder um die Dichte des Mediums 1 zu messen oder auch zu überwachen, ist das Messgerät mit der mechanisch schwingfähigen Einheit 2 an dem Behälter 10 angebracht. Bei der mechanisch schwingfähigen Einheit 2 handelt es sich im gezeigten Fall um eine Schwinggabel, d.h. zwei sog. Gabelzinken sind an einer gemeinsamen Membran angebracht. Hinter der Membran befindet sich die Anrege-/Empfangseinheit 3, welche als Wandler zwischen mechanischen Schwingungen und elektrischen Signalen fungiert. Hierbei handelt es sich beispielsweise um ein piezo-elektrisches Element. Die Anrege-/Empfangseinheit 3 wird von der Elektronikeinheit 4 mit einem Anregesignal S_{A} - einer elektrischen Wechselspannung - beaufschlagt. Dieses Signal wandelt die Einheit 3 in eine mechanische Schwindung der mechanisch schwingfähigen Einheit 2 um. Andererseits empfängt die Anrege-/Empfangseinheit 3 die mechanischen Schwingungen der schwingfähigen Einheit 2 und erzeugt daraus ein Empfangssignal S_{E}, welches der Elektronikeinheit 4 zugeführt wird. Aus den Kenngrößen des Empfangssignals S_{E}, bei welchem es sich ebenfalls um eine elektrischen Wechselspannung handelt, werden dann die gewünschten Prozessgrößen ermittelt.

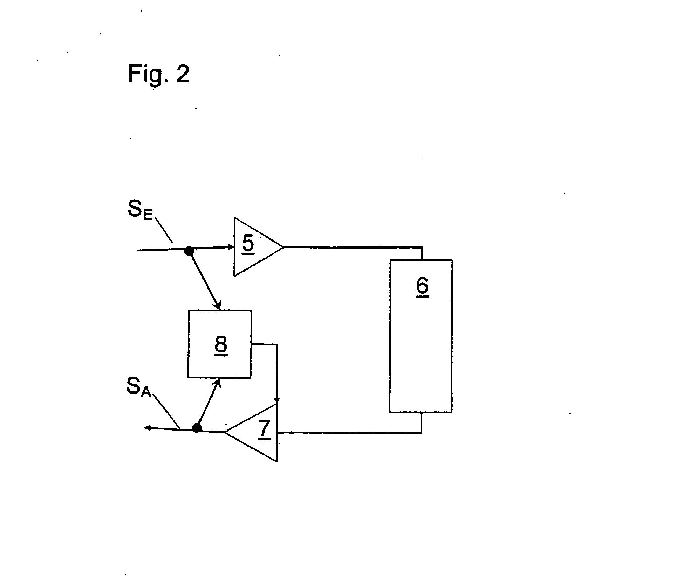

In der Fig. 2 sind die erfindungsgemäßen Bestandteile der Elektronikeinheit 4 dargestellt. Das Empfangssignal S_{E} wird von einem Eingangsverstärker 5 verstärkt und einer Auswerteeinheit 6 zugeführt. Dort findet beispielsweise die Auswertung in Hinsicht auf den Füllstand, die Dichte, die Viskosität oder allgemein die Prozessgröße statt, welche überwacht bzw. gemessen werden soll. Handelt es sich beispielsweise um den Füllstand, so wird eine Verringerung der Schwingfrequenz beispielsweise dahingehend interpretiert, dass das Medium die schwingfähige Einheit 2 erreicht hat. Das verstärkte Signal wird nach der Auswertung und der ggf. erforderlichen Weiterverarbeitung, z.B. einer Filterung über den Ausgangsverstärker 7, wieder der Anrege-/Empfangseinheit 3 zugeführt, um somit kontinuierliche Schwingungen zu erzeugen. Dabei handelt es sich bei dem Ausgangssignal S _{A} bzw. dem Anregesignal vorzugsweise um eine sinusförmige Wechselspannung. Erfindungsgemäß ist eine Regeleinheit 8 vorgesehen, welche hier direkt das Empfangssignal S _{E} auswertet und aufgrund der Information über den Bedeckungsgrad den Verstärkungsfaktor des Ausgangsverstärkers 7 einstellt. In einer alternativen Ausgestaltung ist die Regeleinheit 8 ein Bestandteil der Auswerteeinheit 6.

Ergibt sich aus dem Empfangssignal S _{E}, dass die mechanisch schwingfähige Einheit 2 frei vom Medium 1 schwingt bzw. dass die Dämpfung durch das Medium nur gering ist, so wird der Verstärkungsfaktor des Ausgangsverstärkers 7 reduziert. Dies bewirkt automatisch, dass auch die Amplitude des Empfangssignal S _{E} kleiner wird, da die mechanisch schwingfähige Einheit 2 mit einem Signal geringer Amplitude angeregt wird. Gleichzeitig wird der Verstärkungsfaktor des Eingangsverstärkers 5 erhöht, damit der Gesamtverstärkungsfaktor der Elektronikeinheit 4 im Wesentlichen gleich einem vorgebbaren Wert ist.

Ergibt sich, z.B. aus der Auswertung der Frequenz der Schwingungen, dass die mechanisch schwingfähige Einheit 2 vom Medium 1 bedeckt wird bzw. dass die Dämpfung hoch ist, so wird der Verstärkungsfaktor des Ausgangsverstärkers 7 wieder erhöht, so dass auch die Amplitude des Empfangssignals S_{E} größer wird. Entsprechend wird der Verstärkungsfaktor des Eingangsverstärkers 5 herabgesetzt, so dass die Gesamtverstärkung der Elektronikeinheit einem vorgebbaren Wert entspricht. In der Regeleinheit 8 ist vorzugsweise hinterlegt, wie in Abhängigkeit vom Grad der Bedeckung bzw. vom Grad der Dämpfung durch das Medium die Verstärkungsfaktoren von Ausgangsverstärkers 7 und Eingangsverstärkers 5 einzustellen sind, so dass die Amplitude des Empfangssignals S_{E} innerhalb eines vorgebbaren Bereichs liegt. Alternativ geschieht dies über eine Regelung, indem die Regeleinheit 8 die Amplitude des Empfangssignal S_{E} misst und unter der Annahme, dass sich in der Zwischenzeit der Füllstand nicht geändert hat, den Verstärkungsfaktor passend einstellt. In der in der Fig. 2 gezeigten Fall wird also konkret der Verstärkungsfaktor der Elektronikeinheit 4 über den Verstärkungsfaktor des Ausgangsverstärkers 7 eingestellt.

**Bezugszeichenliste**

**Tabelle 1**

| | |
|---|---|
| 1 | Medium |
| 2 | Mechanisch schwingfähige Einheit |
| 3 | Anrege-/Empfangseinheit |
| 4 | Elektronikeinheit |
| 5 | Eingangsverstärker |
| 6 | Auswerteeinheit |
| 7 | Ausgangsverstärker |
| 8 | Regeleinheit |
| 10 | Behälter |

## Patentansprüche

1. Vorrichtung zur Bestimmung und/oder Überwachung mindestens einer Prozessgröße eines Mediums (1) in einem Behälter (10), mit mindestens einer mechanisch schwingfähigen Einheit (2), wobei es sich bei der mechanisch schwingfähigen Einheit (2) um eine Schwinggabel, einen Einstab oder um einen Membranschwinger handelt, mit mindestens einer Anrege-/Empfangseinheit (3), welche die mechanisch schwingfähige Einheit (2) zu mechanischen Schwingungn anregt und welche die mechanischen Schwingungen der mechanisch schwingfähigen Einheit (2) empfängt, und mit mindestens einer Elektronikeinheit (4), welche die Anrege-/Empfangseinheit (3) mit einem elektrischen Ausgangssignal (S_{A}) beaufschlagt, und welche von der Anrege-/Empfangseinheit (3) ein elektrisches Eingangssignal (S _{E}) empfängt, wobei in der Elektronikeinheit (4) mindestens ein Eingangsverstärker (5) und mindestens ein Ausgangsverstärker (7) vorgesehen sind, und wobei die Elektronikeinheit (4) einen Gesamtverstärkungsfaktor aufweist, **dadurch gekennzeichnet, dass** der Verstärkungsfaktor des Ausgangsverstärkers (7) einstellbar ist, dass der Verstärkungsfaktor des Eingangsverstärkers (5) einstellbar ist, dass die Regeleinheit (8) den Verstärkungsfaktor des Ausgangsverstärkers (7) in Abhängigkeit von der Dämpfung der mechanisch schwingfähigen Einheit (2) durch das Medium derartig einstellt, dass die Amplitude des elektrischen Eingangssignals (S_{E}) im Wesentlichen innerhalb eines vorgebbaren Amplitudenbandes liegt und dass der Verstärkungsfaktor des Ausgangsverstärkers (7) bei geringerer Dämpfung durch das Medium abnimmt und bei höherer Dämpfung durch das Medium zunimmt, und dass die Regeleinheit (8) den Verstärkungsfaktor des Ausgangsverstärkers (7) und den Verstärkungsfaktor des Eingangsverstärkers (5) derartig einstellt, dass der Gesamtverstärkungsfaktor der Elektronikeinheit (4) im Wesentlichen gleich einem vorgebbaren Wert ist.

2. Vorrichtung nach Anspruch 1, **dadurch gekennzeichnet, dass** die Regeleinheit (8) den Verstärkungsfaktor der Elektronikeinheit (4) und/oder des Ausgangsverstärkers (7) derartig einstellt, dass der Verstärkungsfaktor in dem Fall, dass die mechanisch schwingfähige Einheit (2) unbedeckt von dem Medium (1) ist, geringer ist als in dem Fall, dass die mechanisch schwingfähige Einheit (2) bedeckt von dem Medium (1) ist.

3. Vorrichtung nach Anspruch 1 oder 2, **dadurch gekennzeichnet, dass** die Elektronikeinheit (4) das elektrische Ausgangssignal (S_{A}) derartig erzeugt, dass die mechanisch schwingfähige Einheit (2) Grundwellenschwingungen ausführt.

4. Vorrichtung nach Anspruch 1, 2 oder 3, **dadurch gekennzeichnet, dass** die Elektronikeinheit (4) das elektrische Ausgangssignal (S_{A}) derartig erzeugt, dass es sich bei dem elektrischen Ausgangssignal (S _{A}) um eine Wechselspannung handelt.

5. Vorrichtung nach Anspruch 4, **dadurch gekennzeichnet, dass** die Elektronikeinheit (4) das elektrische Ausgangssignal (S_{A}) derartig erzeugt, dass es sich bei dem elektrischen Ausgangssignal (S _{A}) um eine sinusförmige Wechselspannung handelt.

6. Vorrichtung nach mindestens einem der Ansprüche 1 bis 5, **dadurch gekennzeichnet, dass** es sich bei der Regeleinheit (8) um einen Mikroprozessor handelt.

## Claims

1. Unit for determining and/or monitoring at least one process variable of a medium (1) in a tank (10) with at least one unit (2) capable of mechanical oscillation, where the unit (2) capable of mechanical oscillation is a tuning fork, a single-rod or membrane oscillator with at least one excitation/receiver unit (3) which causes the unit (2) capable of mechanical oscillation to oscillate mechanically and which receives the mechanical oscillations of the unit (2) capable of mechanical oscillation; and with at least one electronics unit (4) which subjects the excitation/receiver unit (3) to an electrical output signal (S_{A}), and which receives an electrical input signal (S_{E}) from the excitation/receiver unit (3), where at least one input amplifier (5) and at least one output amplifier (7) are provided in the electronics unit (4), and where the electronics unit (4) has a total amplification factor, **characterized in that** the amplification factor of the output amplifier (7) can be adjusted, and **in that** the amplification factor of the input amplifier (5) can be adjusted, and **in that** the control unit (8) sets the amplification factor of the output amplifier (7) - depending on the damping of the unit (2) capable of mechanical oscillation by the medium - in such a way that the amplitude of the electrical input signal (S_{E}) is primarily within a predefinable amplitude range and that the amplification factor of the output amplifier (7) is reduced in the event of lower damping by the medium and is increased in the event of higher damping by the medium, and that the control unit (8) sets the amplification factor of the output amplifier (7) and the amplification factor of the input amplifier (5) in such a way that the total amplification factor of the electronics unit (4) is primarily equal to a prespecifiable value.

2. Unit as per Claim 1, **characterized in that** the control unit (8) sets the amplification factor of the electronics unit (4) and/or the output amplifier (7) in such a way that the amplification factor is lower when the unit (2) capable of mechanical oscillation is not covered by the medium (1) than when the unit (2) capable of mechanical oscillation is covered by the medium (1).

3. Unit as per Claim 1 or 2, **characterized in that** the electronics unit (4) generates the electrical output signal (S_{A}) in such a way that the unit (2) capable of mechanical oscillation performs fundamental wave oscillations.

4. Unit as per Claim 1, 2 or 3, **characterized in that** the electronics unit (4) generates the electrical output signal (S_{A}) in such a way that the electrical output signal (S_{A}) is an alternating voltage.

5. Unit as per Claim 4, **characterized in that** the electronics unit (4) generates the electrical output signal (S_{A}) in such a way that the electrical output signal (S_{A}) is a sine-form alternating voltage.

6. Unit as per at least one of the Claims 1 to 5, **characterized in that** the control unit (8) is a microprocessor.

## Revendications

1. Dispositif destiné à la détermination et/ou la surveillance d'au moins une grandeur process d'un produit (1) dans un réservoir (10), avec au moins une unité mécanique apte à vibrer (2), l'unité mécanique apte à vibrer (2) étant une fourchette vibrante, une tige ou un oscillateur à membrane, avec au moins une unité d'excitation / de réception (3), laquelle excite l'unité mécanique apte à vibrer (2) en vibrations mécaniques et laquelle reçoit les vibrations mécaniques de l'unité mécanique apte à vibrer (2), et avec au moins une unité électronique (4), laquelle alimente l'unité d'excitation / de réception (3) avec un signal de sortie électrique (SA), et laquelle reçoit de l'unité d'excitation / de réception (3) un signal d'entrée électrique (SE), au moins un amplificateur d'entrée (5) et au moins un amplificateur de sortie (7) étant prévus dans l'unité électronique (4), et l'unité électronique (4) présentant un facteur d'amplification global, **caractérisé en ce que** le facteur d'amplification de l'amplificateur de sortie (7) est réglable, **en ce que** le facteur d'amplification de l'amplificateur d'entrée (5) est réglable, **en ce que** l'unité de réglage (8) règle le facteur d'amplification de l'amplificateur de sortie (7) en fonction de l'amortissement de l'unité mécanique apte à vibrer (2) par le produit, de telle sorte que l'amplitude du signal d'entrée électrique (S_{E}) se situe pour l'essentiel dans la bande d'amplitude prédéfinissable, et que le facteur d'amplification de l'amplificateur de sortie (7) décroît en cas de faible amortissement par le produit et croît en cas de fort amortissement par le produit, et **en ce que** l'unité de réglage (8) règle le facteur d'amplification de l'amplificateur de sortie (7) et le facteur d'amplification de l'amplificateur d'entrée (5), de telle sorte que le facteur d'amplification global de l'unité électronique (4) est pour l'essentiel égal à une valeur prédéfinissable.

2. Dispositif selon la revendication 1, **caractérisé en ce que** l'unité de réglage (8) règle le facteur d'amplification de l'unité électronique (4) et/ou de l'amplificateur de sortie (7), de telle sorte que le facteur d'amplification, dans le cas où l'unité mécanique apte à vibrer (2) n'est pas recouverte par le produit (1), est inférieur au cas où l'unité mécanique apte à vibrer (2) est recouverte par le produit (1).

3. Dispositif selon la revendication 1 ou 2, **caractérisé en ce que** l'unité électronique (4) génère le signal de sortie électrique (S_{A}) de telle sorte que l'unité mécanique apte à vibrer (2) exécute des vibrations fondamentales.

4. Dispositif selon la revendication 1, 2 ou 3, **caractérisé en ce que** l'unité électronique (4) génère le signal de sortie électrique (S_{A}) de telle sorte que, concernant le signal de sortie électrique (SA), il s'agit d'une tension alternative.

5. Dispositif selon la revendication 4, **caractérisé en ce que** l'unité électronique (4) génère le signal de sortie électrique (S_{A}) de telle sorte que, concernant le signal de sortie électrique (SA), il s'agit d'une tension alternative sinusoïdale.

6. Dispositif selon l'une des revendications précédentes 1 à 5, **caractérisé en ce que**, concernant l'unité de réglage (8), il s'agit d'un microprocesseur.
